# EUROPÄISCHE PATENTSCHRIFT

(11) **EP 1 295 782 B1**
(45) Veröffentlichungstag und Bekanntmachung des Hinweises auf die Patenterteilung: **04.05.2005**
(21) Anmeldenummer: 02019691.1
(22) Anmeldetag: 04.09.2002
(51) Int. Cl.: B62D 25/24, F16B 5/06

(54) **Verschlussdeckel für ein Bearbeitungsloch in einem Aluminiumblech**
Closure lid for a working hole in an aluminium sheet
Couvercle pour un trou de montage dans une tôle en aluminium

(30) Priorität: 20.09.2001 DE 10146419
(43) Veröffentlichungstag der Anmeldung: 26.03.2003
(73) Patentinhaber: A. Raymond & Cie, 38028 Grenoble (FR)
(72) Erfinder: Hänsel, Mathias, 79595 Rümmingen (DE); Dorst, Harald, 79576 Weil am Rhein (DE)
(74) Vertreter: Rüttgers, Joachim, Dr.

(56) Entgegenhaltungen:
- DE-A- 2 541 607
- DE-A- 3 442 109
- DE-A- 4 233 472
- US-A- 4 391 384
- US-A- 4 817 262
- US-A- 4 981 405

## Beschreibung

Die Erfindung betrifft einen Deckel zum dauerhaften Verschließen eines oval ausgebildeten Bearbeitungsloches in einem Aluminiumblech durch eine Klebeverbindung. Der Deckel besteht aus einer kreisrunden Aluminiumplatte mit einem konzentrischen Deckelrand und einem innerhalb des Deckelrandes ringförmig aufgetragenen Streifen aus aufschmelzbarem Klebstoff. Ein solcher Deckel gemäß dem Oberbegriff des Anspruchs 1 ist aus der DE-A-2 541 607 bekannt.

Bei den aus Aluminium hergestellten Autokarosserien gibt es eine Vielzahl von Bearbeitungslöchem, die nach erfolgter Benutzung durch entsprechend große Deckel wieder verschlossen werden müssen. Um die Löcher spritzwasserfest zu verschließen, ist es sinnvoll, einen aus dem gleichen Aluminiummaterial gefertigten Deckel mittels eines aufschmelzbaren Klebstoffs rings um das Loch zu verkleben. Dabei ist es notwendig, daß der innerhalb des Deckelrandes aufgetragene Klebstoffstreifen etwa 0,5 bis 0,7 mm höher ist als der Deckelrand. Außerdem ist es aus Gründen der Energie- und Zeitersparnis zweckmäßig, wenn der Klebevorgang in Verbindung mit der katalytischen Tauchbadlackierung der Aluminiumkarosserie durchgeführt wird. Dabei kann der Erwärmungsprozess nach dem Tauchbad gleichzeitig zum Aufschmelzen und Aushärten des Klebstoffs genutzt werden.

Hierbei ist es jedoch wichtig, daß der Deckel rund um das Loch fest auf die Aluminiumplatte aufgedrückt und solange festgehalten wird, bis der Klebstoff ausgehärtet ist. Um dies zu erreichen, wird bei der eingangs genannten Deckelausbildung vorgeschlagen, dass der Innenbereich der Deckelplatte im Abstand der Dicke des Aluminiumblechs mit einer planparallel zur Deckelplatte ausgerichteten Federplatte verbunden ist, deren Außenrand in seiner Kontur der Form des ovalen Bearbeitungsloches entspricht und etwas kleiner ist als der Lochrand, dass in den voneinander entfernteren Randbereichen der Federplatte im Abstand zu ihrem Außenrand viertelkreisförmige, an ihren freien Enden auffederbare Federzungen eingestanzt sind und dass nach dem Einführen der Federplatte in das Bearbeitungsloch bis zum Aufliegen des Klebestreifens auf dem Aluminiumblech die Federplatte mit ihren Federzungen durch eine Vierteldrehung der Deckelplatte auf der Rückseite des Aluminiumblechs durch Federkraft fest zur Anlage bringbar ist.

Der erfindungsgemäß ausgebildete Deckel läßt sich nach dem Einführen der auf der Deckelunterseite drehfest aufmontierten Federplatte in das Bearbeitungsloch nach einer Drehung um 90° schnell und einfach im Bearbeitungsloch zur Anlage bringen, wobei der Deckel durch die Federzungen fest in Anlage auf dem Blech gehalten wird. Da bei der anschließenden katalytischen Tauchbadlackierung keine Tauchbadflüssigkeit zwischen die zu verklebenden Flächen gelangen kann, wird nach dem Schmelzen und Aushärten des Klebstoffs im nachfolgenden Erwärmungsprozess auf einfache Weise eine sichere Verbindung erreicht, die außerdem durch die Federzungen mechanisch gesichert ist, also auch bei Beanspruchung widerstandsfähig bleibt.

Weitere Merkmale der Erfindung ergeben sich aus den Unteransprüchen in Verbindung mit der nachfolgenden Beschreibung der Zeichnung, welche ein Ausführungsbeispiel der Erfindung darstellt. Es zeigt
- Fig. 1: Die Deckelplatte des erfindungsgemäßen Verschlußdeckels in einer Draufsicht,
- Fig. 2: einen Schnitt durch die Deckelplatte gemäß Linie II-II in Fig. 1,
- Fig. 3: die zugehörige Federplatte in einer Draufsicht,
- Fig. 4: die Federplatte in Seitenansicht,
- Fig. 5: den einsatzbereiten Verschlußdeckel von unten gesehen,
- Fig. 6: den Verschlußdeckel im Schnitt gemäß Linie VI-VI in Fig. 5,
- Fig. 7: einen Teilschnitt durch die Federzunge gemäß Linie VII-VII in Fig. 3,
- Fig. 8: einen Teilschnitt durch die Verbindungsstelle gemäß Linie VIII-VIII in Fig. 5 nach dem Durchsatzfügeprozess
- Fig. 9: den Verschlußdeckel in perspektivischer Ansicht von unten,
- Fig. 10: den Verschlußdeckel in perspektivischer Ansicht von oben,
- Fig. 11: das ovale Bearbeitungsloch in einer Draufsicht,
- Fig. 12: den Verschlußdeckel vor dem Einführen der Federplatte in das Bearbeitungsloch,
- Fig. 13: den Verschlußdeckel nach dem Einführen der Federplatte in das Bearbeitungsloch und
- Fig. 14: den im Bearbeitungsloch verriegelten Verschlußdeckel nach einer Drehung um 90°.

Der in den Figuren dargestellte Verschlußdeckel besteht aus einer kreisrunden Dekkelplatte **1** aus Aluminium mit einem konzentrisch umgebördelten Deckelrand **2**, welcher zur bündigen Auflage auf dem Aluminiumblech **8** dient, sowie aus einer mit der Deckelplatte **1** drehfest verbindbaren Federplatte **5**, welche nach dem Einführen in das Bearbeitungsloch **7** und Anliegen des überstehenden Klebestreifens **3** auf dem Aluminiumblech **8** durch eine Vierteldrehung auf dessen Rückseite zur Anlage gebracht werden kann.

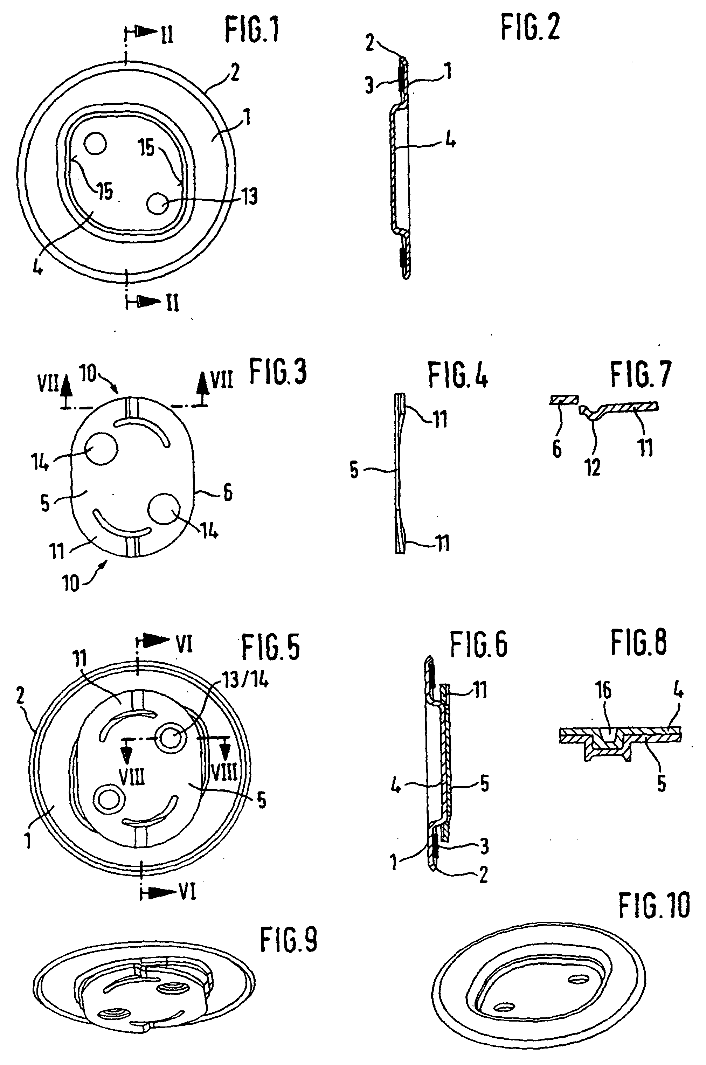

Innerhalb des Deckelrandes **2** ist ein Streifen **3** aus aufschmelzbarem Klebstoff ringförmig aufgetragen, und zwar in solcher Höhe, daß dieser Streifen **3** den Deckelrand **2** um etwa 0,5 bis 0,7 mm überragt. Im mittleren Bereich der Deckelplatte **1** ist ein planparalleler Ansatz **4** eingedrückt bzw. ausgeformt, welcher zur Auflage für die besagte Federplatte **5** dient. Hierbei ist der Abstand **a** zwischen der Ansatzfläche **4** und dem Deckelrand **2** etwas größer als die Dicke **d** des von der Deckelplatte **1** abzudekkenden Alluminiumbleches **8** (siehe **Figur 8**).

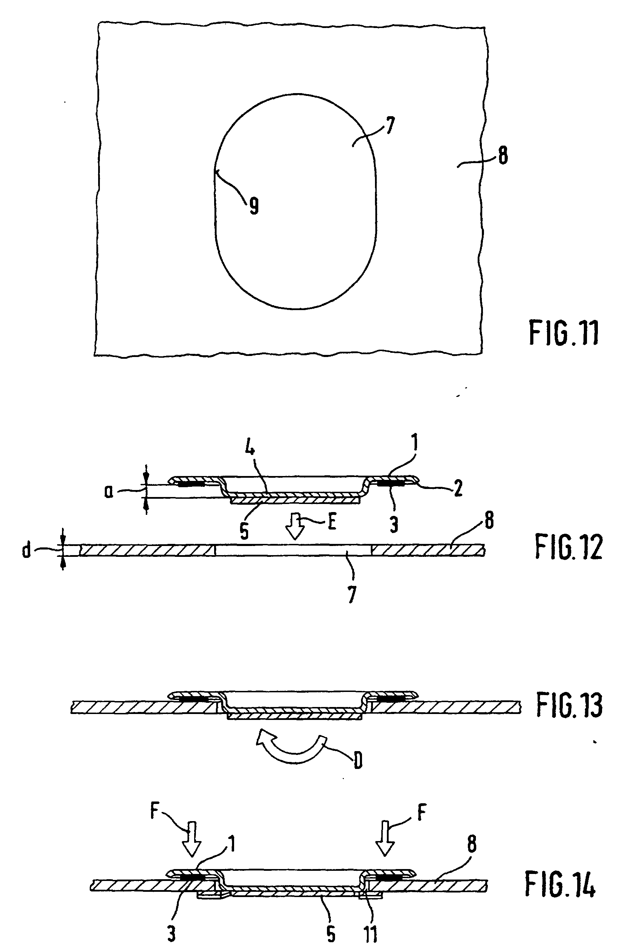

Der Außenrand **6** der in **den Figuren 3 und 4** dargestellten Federplatte **5** weist eine Kontur auf, die der Form des in **Figur 11** dargestellten ovalen Bearbeitungsloches **7** in dem Aluminiumblech **8** entspricht und etwas kleiner ist als der Lochrand **9** des Bearbeitungsloches **7**. In den voneinander entfernteren Randbereichen **10** der Feder platte **5** sind im Abstand zu dessen Außenrand **6** etwa viertelkreisförmige Federzungen **11** ausgestanzt. Diese sind an ihrem einen Ende an der Federplatte **5** auffederbar angeformt. Am auffederbaren Ende der Federzungen **11** sind, wie aus **Figur 7** ersichtlich, Wulste **12** in Richtung auf die Deckelplatte **1** ausgeprägt, welche beim Eindrehen der Federplatte **5** in das Bearbeitungsloch **7** über das Aluminiumblech **8** gleiten und dabei die Vorspannung erzeugen (**Figur 14**). Anstelle der Wulste **12** können auch halbkugelförmige Noppen ausgeprägt sein

In der Ansatzfläche **4** der Deckelplatte **1** sind mindestens zwei Löcher **13** eingeformt und die Federplatte **5** weist im gleichen Abstand zueinander die gleiche Anzahl Bohrungen **14** auf, welche dazu bestimmt sind, die Deckelplatte **1** mit der Federplatte **5** zu vernieten, bzw. zusammenzufügen Der planparallele Ansatz **4** ist vorzugsweise mit zueinander parallelen Innenwänden **15** ausgeformt, welche als Angriffsflächen für einen entsprechend geformten rautenförmigen Kopf eines Drehwerkzeugs und zugleich als Begrenzung für die Vierteldrehung dienen.

Anstelle der herkömmlichen Vernietung kann die drehfeste Verbindung zwischen der Federplatte **5** und der Ansatzfläche **4** vorteilhafterweise auch durch einen sogenannten Durchsatzfügeprozess hergestellt werden (**Figur 8**). Die dabei entstehenden Vertiefungen **16** in der Ansatzfläche **4** können dann ebenfalls als Angriffsflächen für ein mit entsprechenden Stiften versehenes Drehwerkzeug verwendet werden.

In den **Figuren 12 bis 14** sind die einzelnen Stufen der Vormontage des Verschlußdeckels auf dem Aluminiurriblech dargestellt. **Figur 12** zeigt den Verschlußdeckel vor dem Einführen der Federplatte **5** in Pfeilrichtung **"E"** in das ovale Bearbeitungsloch **7**, welches in **Figur 11** in einer Draufsicht zu sehen ist. Sobald die Federplatte **5,** wie aus **Figur 13** ersichtlich, voll in das Loch **7** eingetaucht ist und der Klebstoffstreifen **3** auf dem Aluminiumbleche **8** aufliegt, wird der Verschlußdeckel mittels eines in die Vertiefung des Ansatzes **4** eingreifenden Werkzeugs in Pfeilrichtung **"D"** um 90° gedreht. Dabei laufen die Federzungen **11** mit ihren Wulsten oder Noppen **12** an den auffederbaren Enden über die Rückseite des Aluminiumblechs **8** auf und erzeugen dort mittels der von den Federzungen **11** ausgeübten Federkraft in Pfeilrichtung "**F**" die erforderliche Vorspannung auf die Klebestreifen **3 (Figur 14).**

Der Verschlußdeckel sitzt nun fest im Bearbeitungsloch **7** und kann mit dem Aluminiumblech **8** zusammen die Ofenreise durch eine sogenannte katalytische Tauchbadlackierung antreten. Dabei schmilzt der Kiebstoffstreifen **3** aufgrund der im Ofen herrschenden Temperatur von bis zu 200° C auf und bildet nach dem Aushärten mit dem Aluminiumblech **8** rings um das Bearbeitungsloch **7** eine wasserdichte Verbindung, während der Verschlußdeckel nunmehr nach dem Aufschmelzen des Klebestreifens **3** mit dem Deckelrand **2** auf dem Aluminiumblech **8** aufliegt.

## Patentansprüche

1. Deckel zum dauerhaften Verschließen eines oval ausgebildeten Bearbeitungsloches (7) in einem Aluminiumblech (8) durch eine Klebeverbindung, bestehend aus einer kreisrunden Deckelplatte (1) aus Aluminium mit einem konzentrischen Deckelrand (2) und einem innerhalb des Deckelrandes (2) ringförmig aufgetragenen Streifen (3) aus aufschmelzbarem Klebstoff, **dadurch gekennzeichnet, dass** der Innenbereich der Deckelplatte (1) im Abstand der Dicke des Aluminiumblechs (8) mit einer planparallel zur Deckelplatte (1) ausgerichteten Federplatte (5) verbunden ist, deren Außenrand (6) in seiner Kontur der Form des ovalen Bearbeitungsloches (7) entspricht und etwas kleiner ist als der Lochrand (9), dass in den voneinander entfernteren Randbereichen (10) der Federplatte (5) im Abstand zu ihrem Außenrand (6) viertelkreisförmige, an ihren freien Enden auffederbare Federzungen (11) eingestanzt sind und dass nach dem Einführen der Federplatte (5) in das Bearbeitungsloch (7) bis zum Aufliegen des Klebestreifens (3) auf dem Aluminiumblech (8) die Federplatte (5) mit ihren Federzungen (11) durch eine Vierteldrehung der Deckelplatte (1) auf der Rückseite des Aluminiumblechs (8) durch Federkraft fest zur Anlage bringbar ist.

2. Verschlußdeckel nach Anspruch 1, **dadurch gekennzeichnet, daß** am anderen, auffederbaren Ende der Federzungen (11) Wulste oder Noppen (12) in Richtung auf die Deckelplatte (1) eingeprägt sind.

3. Verschlußdeckel nach einem der Ansprüche 1 oder 2, **dadurch gekennzeichnet, daß** in seinem mittleren Bereich ein planparalleler Ansatz (4) zur Auflage für die Federplatte (5) angeformt ist, wobei der Abstand (a) zwischen der Ansatzfläche (4) und dem Deckelrand (2) etwas größer als die Dicke (d) des Aluminiumbleches (8) ist.

4. Verschlußdeckel nach Anspruch 3, **dadurch gekennzeichnet, daß** in der Ansatzfläche (4) mindestens zwei Löcher (13) eingeformt sind und die Federplatte (5) im gleichen Abstand zueinander die gleiche Anzahl Bohrungen (14) zur gegenseitigen Vemietung oder Fügung aufweist.

5. Verschlußdeckel nach Anspruch 3, **dadurch gekennzeichnet, daß** die Deckelplatte (1) aus einem Aluminiumblech von etwa gleicher Stärke wie das abzudeckende Aluminiumblech (8) gefertigt ist und daß der planparallele Ansatz (4) mit zueinander parallelen Innenwänden (15) ausgeformt ist, welche als Angriffsflächen für ein entsprechend geformtes Drehwerkzeug und zugleich als Begrenzung für die Vierteldrehung dienen.

6. Verschlußdeckel nach Anspruch 3, **dadurch gekennzeichnet, daß** die Verbindung zwischen der Federplatte (5) und der Ansatzfläche (4) durch einen Durchsatzfügeprozess hergestellt ist.

7. Verschlußdeckel nach Anspruch 6, **dadurch gekennzeichnet, daß** die beim Durchsatzfügen entstehenden Vertiefungen (16) auf der Rückseite der Ansatzfläche (4) als Angriffspunkte für ein mit entsprechenden Stiften versehenes Drehwerkzeug verwendet werden.

## Claims

1. Cover for permanently sealing an oval-shaped processing hole (7) in an aluminium sheet (8) by means of an adhesive joint, consisting of a circular aluminium cover plate (1) comprising a concentric cover edge (2) and a hot-melt adhesive strip (3) applied as a ring inside the cover edge (2), **characterized in that**:
- the inside region of the cover plate (1) is connected at a spacing of the thickness of the aluminium sheet (8) to a spring plate (5) which is orientated plane-parallel to the cover plate (1), the outer edge (6) of the spring plate (5) having a contour which corresponds to the shape of the oval processing hole (7) and is somewhat smaller than the hole edge (9);
- in the more widely separated edge regions (10) of the spring plate (5) and spaced from its outer edge (6), quadrant-shaped spring tongues (11) are punched, the spring tongues (11) being bendable at their free ends, and
- after the spring plate (5) has been inserted into the processing hole (7) up to the point where the adhesive strip (3) comes into contact with the aluminium sheet (8), the spring plate (5) with its spring tongues (11) can be firmly seated by spring force on the rear side of the aluminium sheet (8) by rotating the cover plate (1) through a quarter-turn.

2. Closure cover according to claim 1, **characterized in that**, at the other, bendable end of the spring tongues (11), bulges or bumps (12) are impressed towards the cover plate (1).

3. Closure cover according to claim 1 or claim 2, **characterized in that** in the central region of the closure cover a plane-parallel recess (4) is integrally formed to support the spring plate (5), the distance (a) between the surface of the recess (4) and the cover edge (2) being somewhat greater than the thickness (d) of the aluminium sheet (8).

4. Closure cover according to claim 3, **characterized in that** at least two holes (13) are made in the surface of the recess (4), and **in that** the spring plate (5) has the same number of bores (14) spaced apart from each other by the same amount for mutual riveting or joining.

5. Closure cover according to claim 3, **characterized in that** the cover plate (1) is fabricated from an aluminium sheet of approximately the same thickness as the aluminium sheet (8) to be covered, and **in that** the plane-parallel recess (4) is formed with inside walls (15), the inside walls being parallel to each other and serving as contact surfaces for a suitably shaped rotation tool, while at the same time acting as a stop for the quarter-turn.

6. Closure cover according to claim 3, **characterized in that** the connection between the spring plate (5) and the surface of the recess (4) is made by a clinching process.

7. Closure cover according to claim 6, **characterized in that** the depressions (16), which arise during clinching, are employed on the rear side of the recess surface (4) as contact points for a rotation tool, the rotation tool being provided with corresponding pins.

## Revendications

1. Couvercle pour l'obturation définitive d'un trou de façonnage de forme ovale (7), réalisé dans une tôle d'aluminium (8), au moyen d'une liaison collée, se composant d'une plaquette d'aluminium de forme circulaire formant couvercle (1) comportant un bord de couvercle (2) concentrique et une enduction lamellaire de substance adhésive activable par fusion (3), déposée de manière circulaire du bord de couvercle (2), **caractérisé en ce que** la portion intérieure de la plaquette formant couvercle (1) est reliée, à une distance correspondant à l'épaisseur de la tôle d'aluminium (8) à une plaquette élastique (5) orientée dans un plan parallèle à celui de la plaquette formant couvercle (1), dont le bord extérieur (6) a une configuration qui correspond à la forme du trou de façonnage ovale (7) et est légèrement plus petit que le bord (9) du trou, **en ce que** des languettes élastiques en quart de cercle (11), dont les extrémités sont capables de céder par déformation élastique, sont réalisées par découpage à la presse dans les portion d'extrémité (10) respectivement opposées de la plaquette élastique (5) à une certaine distance de son bord extérieur (6) et **en ce qu'**après l'introduction de la plaquette élastique (5) dans le trou de façonnage (7), jusqu'à ce que l'enduction lamellaire de substance adhésive (3) soit appliquée sur la tôle d'aluminium, les languettes élastiques (11) de la plaquette élastique (5) peuvent être bloquées en contact de butée sur la face arrière de la tôle d'aluminium (8), sous l'action de la force exercée par l'effet de ressort, par une rotation de la plaquette formant couvercle (1) dans la proportion d'un quart de tour.

2. Couvercle d'obturation selon la revendication 1, **caractérisé en ce que** des bourrelets ou des renflements (12), orientés en direction de la plaquette formant couvercle (1) sont réalisés par déformation dans l'autre extrémité, capable de céder par déformation élastique, des languettes élastiques (11).

3. Couvercle d'obturation selon l'une des revendications 1 ou 2, **caractérisé en ce qu'**un épaulement (4) est réalisé solidaire par formage dans la partie médiane de celui-ci, selon une disposition parallèle au plan de celle-ci, pour faire office de portée d'appui pour la plaquette élastique (5), l'intervalle d'écartement (a) entre la face de l'épaulement (4) et le bord (2) du couvercle étant en l'occurrence légèrement supérieure à l'épaisseur (d) de la tôle d'aluminium (8).

4. Couvercle d'obturation selon la revendication 3, **caractérisé en ce qu'**au moins deux trous (13) sont réalisés dans la face de l'épaulement (4) et **en ce que** la plaquette élastique (5) comporte, avec le même intervalle d'écartement réciproque, le même nombre de perçages (14) permettant un rivetage ou un assemblage mutuel.

5. Couvercle d'obturation selon la revendication 3, **caractérisé en ce que** la plaquette formant couvercle (1) est fabriquée à partir d'une tôle d'aluminium ayant sensiblement la même épaisseur que la tôle d'aluminium (8) à obturer et ne ce que l'épaulement (4) formé dans un plan parallèle au sien a des parois intérieures (15) respectivement parallèles, qui font office de portées d'emprise pour un outil tournant de configuration correspondante et en même temps de fin de course pour la rotation d'un quart de tour.

6. Couvercle d'obturation selon la revendication 3, **caractérisé en ce que** la liaison entre la plaquette élastique (5) et la face de l'épaulement (4) est réalisée au moyen d'un procédé d'assemblage par compression réciproque.

7. Couvercle d'obturation selon la revendication 6, **caractérisé en ce que** les dépressions (16) produites sur la surface arrière de la face de l'épaulement (4) lors de l'assemblage par compression réciproque font office de portées d'emprise pour un outil tournant muni de broches de configuration correspondante.
